# EUROPEAN PATENT APPLICATION

(11) **EP 2 119 671 A1**
(43) Date of publication of application: **18.11.2009**
(21) Application number: 08156146.6
(22) Date of filing: 14.05.2008
(51) Int. Cl.: C01F 7/00, C01F 7/02, B01J 23/00, B01J 23/10, B01J 23/34, B01J 37/00, C01F 17/00, C01G 45/00

(54) **Preparation of hexaaluminate**

(71) Applicant: Elm Svensson, Erik, 183 56 Täby (SE); Boutonnet, Magali, 183 79 Täby (SE); Järäs, Sven, 187 70 Täby (SE)
(72) Inventor: Elm Svensson, Erik, 183 56 Täby (SE); Boutonnet, Magali, 183 79 Täby (SE); Järäs, Sven, 187 70 Täby (SE)
(74) Representative: Presland, Torbjörn

(57) **Abstract**

A method for preparing a hexaaluminate. The method comprises the steps of a) providing a porous template material, wherein pores having a pore size of about 5-200 nm form at least about 50% of the total pore volume; b) impregnating the material with a liquid comprising metal elements corresponding to the elements of said hexaaluminate to provide an impregnated material; c) drying the impregnated material to provide a dried material; d) optionally, repeating at least once step b), using the dried material, and step c); e) calcining the dried material in an inert atmosphere to provide a calcined material; and f) recovering the hexaaluminate by removing template material from the calcined material. A composition obtainable by such a method. A catalyst composition comprising a hexaaluminate, wherein the composition has an average surface area of at least about 9 m²/g after ageing of the composition in a moist high-temperature atmosphere. A supported catalyst comprising such a composition. Use of such a composition as a catalyst in a high-temperature application.

## Description

### Technical Field of the Invention

The present invention relates to a method for preparing a hexaaluminate, to a composition obtainable by said method, to a catalyst composition comprising a hexaaluminate, to a supported catalyst comprising such composition and to the use of such composition in a high-temperature application.

### Background Art

Catalysts are important in many industrial applications. For example, in combustion processes the use of catalysts minimizes the amount of produced nitrogen oxide (NOₓ), CO and unburned hydrocarbons. The material used as a catalyst preferably has a high surface area so as to facilitate the best possible conditions for the catalyzed reaction. However, in high-temperature applications such as catalytic combustion, the materials often have to withstand at least one year of operation at temperatures as high as 1400 °C in the presence of steam, thermal shocks and gas velocities around 25 m/s. These harsh conditions usually dramatically decrease the high surface area of the catalysts, normally due to phase transitions and sintering processes, i.e. agglomeration of catalyst particles.

One of the most promising groups of materials for use as high-temperature catalysts are hexaaluminates, mainly due to their extreme sintering resistance. This has been explained by the layered structure of the hexaaluminates, which consists of alumina blocks with spinel-like structure separated by mirror planes hosting large ions. The separation of the spinel blocks results in two-dimensional crystal growth and thus the formation of plate-shaped crystals, which seems to be the reason for slow sintering.

There are mainly three methods for preparation of hexaaluminates that have been used; co-precipitation, sol-gel synthesis and sol-gel synthesis within a microemulsion.

Co-precipitation involves dissolving precursor salts in an aqueous medium and adding an excess of precipitating agent to prepare the hexaaluminate. This method has, however, resulted in hexaaluminates with a relatively small surface area, typically from 10 to 15 m²/g, as measured after calcination at 1300-1400 °C for 10 hours in air (Groppi, G. *et al.,* J. Mater Sci (1994), 29, p. 3441).

Sol-gel synthesis of hexaaluminates, disclosed in US 4,788,174, comprises hydrolysis of alkoxides to form hexaaluminates. Some of the components, such as metal nitrates, are dissolved in an aqueous solution used for the hydrolysis. The metal ions in the aqueous solution may then form an inorganic continuous network during hydrolysis. The product is separated and calcined to form the hexaaluminate. Also this method has resulted in hexaaluminates having relatively small surface areas, such as from 3 to 23 m²/g, as measured after calcination at 1300 °C for 5 hours in air.

Preparation of hexaaluminates using sol-gel synthesis within a microemulsion is disclosed by Zarur *et al.* (Zarur, A. J. and Ying, J. Y., Nature (2000), 403. p. 65). In this method, reversed microemulsions with micelles stabilized by surfactants in a continuous oil phase is used. The micelles are used as reactors for controlled hydrolysis and condensation of alkoxides to form the hexaaluminates. The synthesis parameters, such as the composition of the microemulsion and the water to alkoxide ratio, determines the particle morphology and surface area. However, as soon as the produced hexaaluminates are recovered from the microemulsion, the protection against particle agglomeration disappears. Zarur *et al.* therefore found that a very complicated recovery procedure comprising freeze-drying and purification by supercritical drying was necessary in order maintain any useful surface area after calcination.

Hard-templating techniques have been used in the preparation of metal oxides, such as the preparation of ZrO₂ and MgAl₂O₄ disclosed in US 2005/0239645. In these techniques, the oxides are prepared from precursor materials in the pores of a matrix that later is removed. Activated carbons are examples of pore-containing matrix materials that have been used.

To summarize, the prior art fails to provide a hexaaluminate suitable for use in high-temperature applications, such as in catalytic combustion.

### Summary of the Invention

It is an object of the present invention to provide a catalyst suitable for high-temperature applications.

An object of the invention is also to provide an improved catalyst, i.e. a catalyst that has high sintering resistance, especially in a moist atmosphere.

A further object is to provide a catalyst that maintains a high surface area in high-temperature applications.

Another object is to provide a catalyst that minimizes the amount of produced nitrogen oxide (NOₓ), CO and unburned hydrocarbons in high-temperature catalytic combustion.

A further object of the invention is to provide a convenient preparation method for catalysts suitable for high-temperature applications.

Yet another object of the invention is to provide a hexaaluminate that maintains a high surface area in harsh environments.

The above-mentioned objects as well as other objects of the invention, which can be gathered by a person skilled in the art after having studied the description below, are met by the different aspects of the disclosed invention.

As a first aspect of the invention, there is provided a method for preparing a hexaaluminate, comprising the steps of:
a) providing a porous template material, wherein pores having a pore size of about 5-200 nm form at least about 50% of the total pore volume;
b) impregnating the material with a liquid comprising metal elements corresponding to the elements of said hexaaluminate to provide an impregnated material;
c) drying the impregnated material to provide a dried material;
d) optionally, repeating at least once step b), using the dried material, and step c);
e) calcining the dried material in an inert atmosphere to provide a calcined material; and
f) recovering the hexaaluminate by removing template material from the calcined material.

In the context of the present disclosure, a hexaaluminate is defined as a hexagonal aluminate comprising alumina blocks with spinel-like structure separated by mirror planes, or conduction layers, hosting large ions. As an example, the ions may be alkali, alkaline earth, rare earth or transition metal ions. The hexaaluminate may comprise ions of different elements, such as different alkali, alkaline earth, rare earth and/or transition metal ions.

A porous template material refers to a solid material admitting the passage of gas and liquid through pores or interstices of the material.

The total pore volume refers to the total pore volume as measured using standard methods. For example, the total pore volume may be determined from gas adsorption porosimetry, such as nitrogen adsorption at liquid nitrogen temperature, where nitrogen gas condensation in pores is measured by volume, or from mercury intrusion porosimetry. The pore sizes, pore size distributions and the cumulative pore volume may be calculated using the BJH method from the gas adsorption data. The pore size is a standard term that refers to the average diameter of a pore.

Impregnating the material with a liquid may refer to the soaking of or the saturation of the material with the liquid, e.g. by soaking it thoroughly with the liquid, so that a majority of the pores become filled with the liquid. The liquid may be an aqueous solution or a non-aqueous solution. The non-aqueous solution may be an organic solution, such as a solution in iso-propanol. The liquid may also be an emulsion.

The metal elements may be present in the form of ions, such as metal nitrate ions of the metal elements, or metal elements bound in an alkoxide, or metal elements bound in another composition so that, at high temperatures, the metal elements are capable to form one or several hexaaluminate phases within the pores of the template material.

Metal elements corresponding to the elements of the hexaaluminate refer to metal elements that, after preparation of the hexaaluminate, form the alumina blocks and the mirror planes or conduction layers.

Drying the impregnated material refers to removing essentially all moisture from the impregnated material, e.g. by heating of the impregnated material at 60 °C for at least 16 hours. A person skilled in the art understands how to select appropriate drying conditions to remove essentially all moisture from the impregnated material.

Repeating the steps of impregnating, using the dried material, and drying refers to re-impregnating the dried material with a liquid comprising metal elements corresponding to the elements of said hexaaluminate. Thus, impregnating and drying the template material may be repeated for any number of times, so as to ensure that the porous template material has been impregnated with a sufficient amount of metal elements. The liquid used when repeating the impregnating step may comprise the same type of metal elements as used during any earlier impregnation of the porous template material or different types of metal elements compared to any earlier impregnation of the porous template material.

Calcining the dried material in an inert atmosphere refers to the heating of the dried material to a high temperature, such as heating of the dried material at 1300 °C for 5 hours, causing loss of moisture, thermal decomposition and solid-state reactions between metal oxides in an inert atmosphere. The inert atmosphere may comprise argon (Ar). During calcining, a hexaaluminate is formed in the pores of the template material.

Recovering the hexaaluminates by removing template material from the calcined material may involve reaction with a reactive gas, e.g. combustion if the reactive gas comprises oxygen, so that essentially all template material is removed from the hexaaluminate. As another example, removing the template material comprises dissolving template material by suitable agents, for example by using alkaline conditions or strong acids, so that essentially all template material is removed from the hexaaluminate. Depending on the composition of the template material, the person skilled in the art understands how to select an appropriate method for removing essentially all template material.

The invention is based on the insight that using a porous template material, wherein pores having a pore size of about 5-200 nm form at least about 50% of the total pore volume, allows for the preparation of a hexaaluminate with a very high average surface area that is maintained under harsh conditions, such as in high-temperature conditions in a moist atmosphere. The pores size distribution of the template material has thus been found to be crucial for the properties of the prepared hexaaluminate, since attempts to use a template material having a pore size distribution different from the pore size distribution of the disclosed invention have not given satisfactory results, as seen in Examples 1 and 2. The porous template material may thus serve as a matrix, or a mechanical pattern, that guides the growth of the hexaaluminates within the pores of the material. Further, the method does not require any complicated recovery procedures for removing the template material. Moreover, a hexaaluminate prepared according to the disclosed method maintains a high surface area even after ageing in a moist high-temperature atmosphere, such ageing for 10 hours at 1400 °C in a moist atmosphere comprising 10 volume% H₂O. Consequently, templating a hexaaluminate with a porous template material wherein pores having a pore size of about 5-200 nm form at least about 50% of the total pore volume, gives a hexaaluminate suitable for use in a high-temperature application, such as catalytic combustion. The disclosed preparation method and the properties of the prepared hexaaluminate are exemplified in Examples 1 to 4, which illustrate the efficiency and advantages of the disclosed invention.

As a preferred example, pores of a pore size of about 10-100 nm may form at least about 50% of the pore volume. As a more preferred example, pores of a pore size of about 10-100 nm, preferably about 10-50 nm, may form at least about 75% of the pore volume. More preferably, pores of a pore size of about 10-50 nm may form at least about 90% of the pore volume. If the pores of the template material are more homogenous, it may lead to a higher degree of homogeneity of the prepared hexaaluminate.

The porous template material may be carbonaceous. The term "carbonaceous" refers to a material that is rich in carbon. A carbon-rich material facilitates a non-complicated recovery procedure of prepared hexaaluminate within the pores, e.g. a recovery procedure that comprises combustion.

The carbonaceous porous template material may be a carbon gel, such as a carbon xerogel or a carbon aerogel. A "carbon gel" refers to a porous material defined by a macromolecular network of carbon. A "carbon xerogel" refers to a solid form of a carbon gel obtained by drying and a "carbon aerogel" refers to a solid form of a carbon gel obtained by solvent removal under supercritical conditions.

As an alternative, the porous template material may comprise silica, such as in the form of a silica gel or an ordered silica gel.

The hexaaluminate may be present in a beta-alumina phase or a magnetoplumbite phase.

A beta-alumina phase refers to an aluminate having a hexagonal crystal structure with the ideal chemical formula expressed as MAl₁₁O₁₇, wherein M represents a large cation, Al represents aluminum and O represents oxygen.

A magnetoplumbite phase refers to an aluminate having a hexagonal crystal structure similar to that of the mineral magnetoplumbite with the ideal chemical formula expressed as MAl₁₂O₁₉, wherein M represents a large cation, Al represents aluminum and O represents oxygen.

The hexaaluminate may be present in a related phase to the beta-alumina and the magnetoplumbite phases. As used herein, a related phase is an aluminate with hexagonal crystal structure with a non-stoichiometric composition compared to the ideal chemical formulae for the beta-alumina and the magnetoplumbite phase.

The hexaaluminate may be present in one or several of the above-mentioned phases, such as comprising different crystals structures of the above-mentioned phases.

According to the present invention, the hexaaluminate may comprise the elements
Al, O, A and, optionally, B
wherein Al represents aluminum, O represents oxygen, A represents one or more species selected from alkali metals, alkaline earth metals and rare earth metals and B represents one or more species selected from transition metals, Li and Mg.

As used herein, an alkali metal refers to any one of the metals comprised in Group 1 of the IUPAC periodic table, i.e. Li, Na, K, Rb, Cs and Fr. As used herein, an alkaline earth metal refers to any one of the metals comprised in Group 2 of the IUPAC periodic table, i.e. Be, Mg, Ca, Sr, Ba, and Ra. Moreover, as used herein, a rare earth metal refers to Sc, Y and the lanthanides, i.e. La, Ce, Pr, Nd, Pm Sm, Eu, Gd, Tb, Dy, Ho, Er, Tm, Yb and Lu. Further, as used herein, a transition metal refers to an element found in groups 3 to 12 in the IUPAC periodic table, i.e. Sc, Y, La, Ac, Ti, Zr, Hf, Rf, V, Nb, Ta, Ha, Cr, Mo, W, Sg, Mn, Tc, Re, Ns, Fe, Ru, Os, Hs, Co, Rh, Ir, Mt, Ni, Pd, Pt, Ds, Cu, Ag, Au, Rg, Zn, Cd, Hg and Uub. When A is one or more species selected from alkali metals, alkaline earth metals and rare earth metals, it may increase the stability of the hexaaluminate. When B is one or more species selected from transition metals, Li and Mg, it may increase the catalytic properties of the hexaaluminate. A and B may be selected depending on the reaction the hexaaluminate is intended to catalyze, since A and B may have different activity for different reactions. The hexaaluminate may comprise more than one type of A, such as alkali metals, alkaline earth metals or rare earth metals A of different elements. Further, the hexaaluminate may comprise more than one type of B, such as transition metals of different elements or any combination of Li, Mg and any transition metal.

The stoichiometric relation of the elements A, B and Al may also be described by the general formula

AB_{X}Al_{12-X}

wherein X is an integer from 0 to 11, preferably from 1 to 3. Thus, the structure describing the hexaaluminate may be a structure comprising twelve aluminum atoms Al, or a structure where any type of B is substituted for up to eleven of these aluminum atoms Al. If X is equal to 1, B may be of only one species. If X is equal to or larger than 2, B may be of the same species or of different species. However, the total number of B in the structure describing the hexaaluminate may not be more than eleven.

The stoichiometric relation between the elements A, B Al, and O may be described by the general formula

AB_{X}Al_{12-X}O_{Y}

wherein X is an integer from 0 to 11 and Y is an integer from 17 to 19.

The oxygen atoms O are crucial for forming a hexaaluminate, and the number of oxygen atoms O may depend on the number of A, B and Al in the hexaaluminate structure.

A may be one or more species selected from La, Ba, Sr, K, Ca, Ce and Nd. If A is any one of La, Ba, Sr, K, Ca, Ce or Nd, it may give a hexaaluminate that is more suitable in high-temperature applications.

B may be one or more species selected from Mg, Cr, Mn, Fe, Co, Ni and Cu. If B is any one of Mn, Fe, Cu, Cr, or Co, it may give a hexaaluminate that is suitable for catalyzing methane oxidation. If B is any one of Mn, Fe, Cu, Cr, or Co and combined with Mg, it may give a hexaaluminate that is suitable for catalyzing methane oxidation. If B is Ni, it may give a hexaaluminate that is suitable for catalyzing partial oxidation.

The hexaaluminate may be LaAl₁₁O₁₈, LaMnAl₁₁O₁₉ or LaMgAl₁₁O₁₉.
These hexaaluminates have shown to have outstanding surface areas and sintering resistance, as shown in Examples 2 and 3.

The hexaaluminate prepared by the disclosed method may also be described by the stoichiometric relation of the metal elements present in the liquid used for impregnating the porous template material. As an example, the stoichiometric relation of the metal elements in the liquid comprises a (A:Al) molar ratio of about from (1:7) to (1:15), such as a (La:Al) molar ratio of (1:11) when preparing LaAl₁₁O₁₈, LaMnAl₁₁O₁₉ or LaMgAl₁₁O₁₉, as seen in Example 2. As another example, the stoichiometric relation of the metal elements in the liquid comprises a (B:Al) molar ratio about from (1:7) to (1:15), such as a (Mn:Al) molar ratio of (1:11) when preparing LaMnAl₁₁O₁₉ or a (Mg:Al) molar ratio of (1:11) when preparing LaMgAl₁₁O₁₉, as seen in Example 2.

As a second aspect of the invention, there is provided a composition obtainable by a method described above. The composition may comprise one or more hexaaluminate(s) present in one or several of the phases described above. The composition may comprise one or more hexaaluminate structure(s) in respect of elements A and B. The composition may further comprise other metal oxides. For example, such metal oxides can be present in other crystal phases than the hexaaluminate phase, such as LaAlO₃, α-Al₂O₃ or Θ-Al₂O₃.

As a third aspect of the invention, there is provided a catalyst composition comprising a hexaaluminate, wherein the composition has an average surface area of at least about 9 m²/g, preferably at least about 16 m²/g, after ageing of the composition in a moist high-temperature atmosphere. The average surface area may be calculated using standard methods, such as nitrogen adsorption at liquid nitrogen temperature and the average surface area may be determined using the BET method. It is well-known that steam, such as a moist atmosphere, which is inevitably present in a combustor, severely decreases the surface areas of porous materials by enhancing the sintering process of porous materials. Thus, the compositions provided in the present disclosure are surprisingly stable, considering the high surface area found after treatment in the extremely harsh conditions. As a result, the compositions provided in the present disclosure are suitable for use in high-temperature applications. As an example, the average surface area is as measured after ageing of the composition for 10 hours at 1400 °C in a moist atmosphere comprising 10 volume% H₂O. Since a normal working temperature in a high-temperature catalytic combustor is 800-1000 °C, ageing of the composition for 10 hours at 1400 °C in a moist atmosphere comprising 10 volume% H₂O mimics an ageing at 800-1000 °C in a moist atmosphere for a much longer period of time. Consequently, treatment at 1400 °C for 10 hours in moist atmosphere comprising 10 volume% H₂O can be regarded as a standard method for evaluating the sintering resistance of catalysts. Therefore, the catalyst compositions of the present disclosure are suitable for long time use in a high-temperature catalytic combustor.

As a fourth aspect of the invention, there is provided a supported catalyst having a support body and a coating comprising a composition provided as defined above. The reaction catalyzed by the supported catalyst may take place at the surface of the coating comprising the composition or inside the coating comprising the composition. The support body may preferably be chemically inert, i.e. so it does not take any significant part in the reaction catalyzed by the coating comprising the composition. The surface of the support body may be either smooth or rough. If the surface is rough, it may facilitate the adherence of the coating comprising the composition. The support body may be a continuous solid having macropores, such as a monolith. The coating comprising the composition may be adhered to the support body by any type of immobilization technique. The composition may be immobilized on the surface of the support body or in any number of pores of the support body. The thickness of the coating comprising the composition may be of any thickness, such as from a few µm to hundreds of µm. Consequently, a supported catalyst having a support body and a coating comprising the composition defined above is suitable for use as a catalyst in high-temperature applications.

As a fifth aspect of the invention, there is provided the use of a composition as described above as a catalyst in a high-temperature application, such as a high-temperature application operating above about 800 °C, preferably above about 1000 °C, more preferably above about 1200 °C. The high-temperature application may be catalytic combustion. Thus, the present disclosure provides the use of a catalyst that has extreme sintering resistance in high-temperature applications. Consequently, the use of the compositions allows for a catalytic combustion that operates at low fuel concentration and minimizes the production and emission of pollutants, such as NO_{X}, CO and unburned hydrocarbons.

### Brief description of the drawings

Figure 1 shows the pore size distributions of a carbon xerogel as prepared in Example 1.
Figure 2 shows the pore size distribution of activated carbon used as a comparative example in Example 1 and Example 2.

### Examples

The following non-limiting examples will further illustrate the present invention.

### Example 1. Preparation of a template material

### Materials and methods

A carbon xerogel was prepared by pyrolysis of a resorcinol-formaldehyde (RF) gel in argon atmosphere, similar as to what is described by Li *et al.* (Li, W-C. et al., Chem. Mater. (2005), 17, p. 3620). The RF gel was synthesized in an aqueous solution of resorcinol (Fluka, 99%) and formaldehyde (Fluka, 36.5% in water, methanol-stabilized) in a molar ratio of 1:2. Magnesium acetate tetrahydrate (Fluka, >99 %) was used as catalyst. Resorcinol and the catalyst were dissolved in deionized water (Milli-Q), after which the formaldehyde was added under stirring. The solution was stirred for 24 hours at room temperature and thereafter poured in an Erlenmayer flask, which was sealed. The flask was thereafter placed in an oven and heated at 50 °C for 24 hours and at 90 °C for 72 hours. This treatment led to solidification of the RF gel, due to polycondensation of resorcinol with formaldehyde. The formed dark red gel was immersed in acetone for 48 hours (the used acetone was replaced with fresh after 24 hours) in order to exchange the water in the RF gel. After drying the RF gel at room temperature and atmospheric pressure for 24 hours, it was pyrolyzed at 1400 °C, for 2 hours in argon atmosphere and thereby forming the carbon xerogel. The amount of RF gel used for each batch was 3 grams and the flow of argon was set to 1.25 dm³/min. The exit gas was analyzed on-line for CO and CO₂ with two NDIR-analyzers placed in series, in order to follow the carbonization. Merely as a comparison, high-purity activated carbon (Darco KB-B) purchased from Aldrich was also tested as a template material. Surface area and pore size distribution of the tested template materials were measured by nitrogen adsorption at liquid nitrogen temperature using a Micromeretics ASAP 2010 instrument. Before analyses the samples were degassed at 200 °C for at least 5 h. Pore sizes and the pore size distributions were calculated using the BJH method (Barret, E. P. et al., J. Am. Chem. Soc (1951), 73, p. 373) from the adsorption data.

### Results

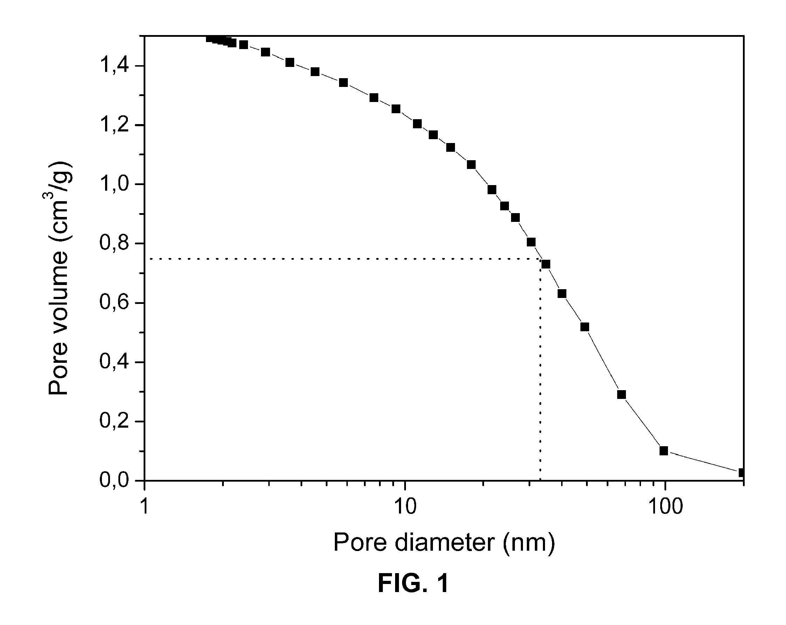

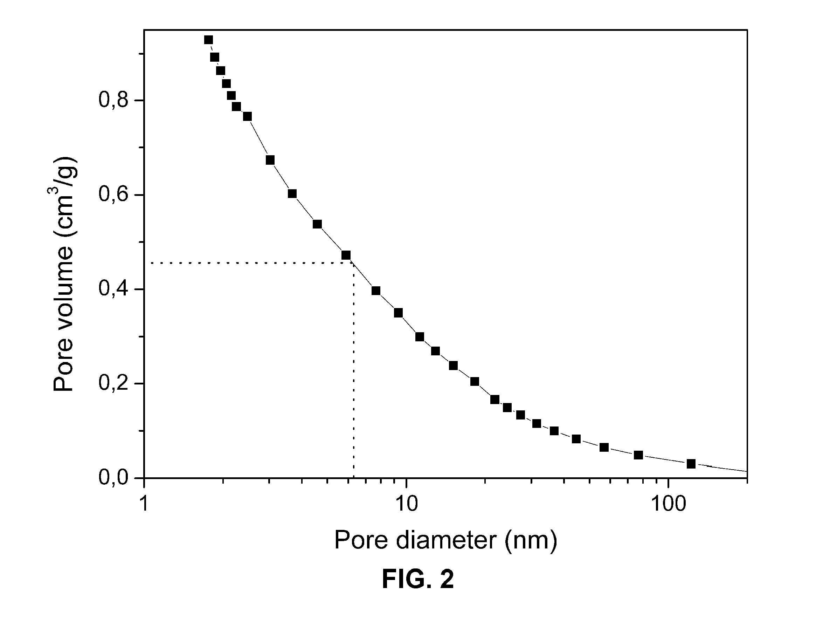

The pore size distribution of the carbon xerogel calcined at 1400 °C is shown in Figure 1 and the pore size distribution of the activated carbon calcined at 1400 °C is shown in Figure 2 with 50% of the total pore volumes indicated with dotted lines. As seen in Figure 1, only a small portion of the pores of the carbon xerogel was smaller 10 nm. Approximately 75% of the pores were between 10 to 100 nm in diameter. As seen in Figure 2, the pore size distribution of the activated carbon was quite different compared to the carbon xerogel. The majority of pores were below 7 nm in diameter; approximately 65% were below 10 nm.

### Example 2. Preparation of hexaaluminates

### Materials and methods

The hexaaluminates were prepared by means of carbon templating. Two types of carbons were used as template material: the carbon xerogel prepared as in Example 1 and a high-purity activated carbon (Darco KB-B) purchased from Aldrich. Three types of lanthanum hexaaluminates were prepared: LaAl₁₁O₁₈ (LHA), LaMnAl₁₁O₁₉ (LMHA) and LaMgAl₁₁O₁₉ (LMgHA). As metal sources, La(NO₃)₃·6H₂O, Al(NO₃)₃·9H₂O, Mg(NO₃)₃·6H₂O and Mn(NO₃)₂ (45-50 wt.% in aqueous solution) were used. The carbons were impregnated by filling the total pore volumes with aqueous solutions of metal nitrates (incipient wetness). The impregnated carbon was dried at 60 °C for at least 16 hours. The impregnation/drying procedure was repeated once. The metal concentrations (M) in the aqueous solutions used to impregnate the carbons were (La:Al:Mn:Mg) = (0.15:1.65:0:0) for LHA, (La:AI:Mn:Mg) = (0.15:1.65:0.15:0) for LMHA and (La:Al:Mn:Mg) = (0.15:1.65:0:0.15) for LMgHA. All nitrates used were supplied by Aldrich and were of ACS-reagent grade. After drying, the impregnated carbons were calcinated in inert atmosphere (argon) at 1300 °C for 5 hours, and the carbon was finally removed by calcination in air at 1000 °C for 10 hours. Surface area and pore size distribution of the prepared compositions were measured by nitrogen adsorption at liquid nitrogen temperature using a Micromeretics ASAP 2010 instrument. Before analyses the samples were degassed at 200 °C for at least 5 h. Pore sizes and the pore size distributions were calculated using the BJH method (Barret, E. P. *et al.,* J. Am. Chem. Soc. (1951), 73, p. 373) from the adsorption data and the surface area was calculated using the BET-method (Brunauer, S. *et al.,* J. Am. Chem. Soc. (1938), 60, p. 309). The crystal phases were determined by X-ray diffraction (XRD), using a Siemens Diffractometer D5000 scanning 2θ from 10°-90° using Ni-filtered Cu-Kα radiation. Crystal phases were identified by comparing the diffractograms with powder diffraction files (ICDD/JCPDS, PDF-2).

### Results

The properties of the prepared hexaaluminates are summarized in Table
1. When activated carbon was used as the template material, the prepared compositions displayed surface areas from 55-66 m²/g. However, the content of hexaaluminate in these materials was low. All materials were poorly crystalline and despite the high calcination temperature, γ-Al₂O₃ was observed as the major phase in all three of these materials. For LHA templated using the activated carbon, not even a trace of hexaaluminate was detected. LMHA and LMgHA templated using activated carbon contained hexaaluminates, but the major phase in both these samples was γ-Al₂O₃. Thus, activated carbon, having a pore size distribution as seen in Figure 2, with pores of a pore size below 7 nm forming the majority of the pore volume, could not be used as a template material for preparing a sufficient amount of hexaaluminate. In contrast to the activated carbon, templating with the carbon xerogel, having a pore size distribution as seen in Figure 1, did allow for the formation of a large amount of the hexaaluminate phase. The materials templated by the carbon xerogel also displayed high surface areas, about 44-49 m²/g. Consequently, the pore size distribution of the templating material is crucial for the possibility to form hexaaluminate.

**Table 1**

| **Material** | **Template material** | **Phases** | **Surface Area** |
|---|---|---|---|
| LHA | A | γ, LAP, LP | 66 m²/g |
| LHA | CX | LAP, HA | 48 m²/g |
| LMHA | A | γ, LMP, HA, LP, (LAP) | 55 m²/g |
| LMHA | CX | LAP, HA, (α) | 44 m²/g |
| LMgHA | A | γ, HA, LP, (LAP) | 60 m²/g |
| LMgHA | CX | HA, LAP | 49 m²/g |

Table 1 is a summary of the prepared materials and their structural properties The material codes used in Table 1 represent the type of hexaaluminate prepared: LHA = LaAl₁₁O₁₈, LMHA = LaMnAl₁₁O₁₉, LMgHA = LaMgAl₁₁O₁₉. The template material codes used in Table 1 represent the type of template material used in the preparation, where A = Darco KB-B and CX = carbon xerogel. All materials were calcined at 1300 °C in argon and heated for 5 hours while still in the carbon matrix and all calcinations in air were performed in dry air for 10 hours. The crystal phases (XRD) are listed in order of intensity, where brackets are used to indicate trace amount. The phase codes used in the Table 1 represent the following: HA = hexaaluminate, LAP = LaAlO₃, LMP = LaMnO₃, LP = LaPO₄, γ = γ-Al₂O₃, α = α-Al₂O₃. The surface areas were determined according to BET.

### Example 3. Stability of prepared hexaaluminates

### Materials and methods

The stability of the compositions templated by carbon xerogel in Example 2 was investigated by subjecting them to calcinations for 10 hours at 1200 °C and 1400 °C in air with 10 volume% H₂O. Characterizations of phase and surface area were performed after calcination at 1200 °C and completion of the test. The surface area was measured by nitrogen adsorption at liquid nitrogen temperature using a Micromeretics ASAP 2010 instrument. Before analyses the samples were degassed at 200 °C for at least 5 h. The surface area was then calculated using the BET-method (Brunauer, S. et al., J. Am. Chem. Soc. (1938), 60, p. 309). The crystal phases were determined by X-ray diffraction (XRD), using a Siemens Diffractometer D5000 scanning 2θ from 10°-90° using Ni-filtered Cu-Kα radiation. Crystal phases were identified by comparing the diffractograms with powder diffraction files (ICDD/JCPDS, PDF-2).

### Results

The results of the stability analyses are shown in Table 2. As seen, the surfaces areas were largely retained after the calcination at 1200 °C, demonstrating an impressive stability of the prepared compositions. The surface area dropped during calcination at 1400 °C, as the hexaaluminate phase was formed as the major phase in LMHA and LMgHA. It has been frequently reported that the surface area decreases simultaneous with the formation of the hexaaluminate phase (Groppi, G. et al., Catalysis (1997), 13, p. 85). All compositions displayed very high surface areas considering the duration and temperature of the calcinations, making them suitable as catalysts in high-temperature catalytic combustion.

**Table 2**

| **Material** | **Temperature** | **Phases** | **Surface Area** |
|---|---|---|---|
| LHA | 1000 °C | LAP, HA | 48 m²/g |
| LHA | 1200 °C | LAP, HA | 35 m²/g |
| LHA | 1400 °C | LAP, HA | 16 m²/g |
| LMHA | 1000 °C | LAP, HA, (α) | 44 m²/g |
| LMHA | 1200 °C | HA, LAP, (α) | 37 m²/g |
| LMHA | 1400 °C | HA, (LAP), (α) | 9 m²/g |
| LMgHA | 1000 °C | HA, LAP | 49 m²/g |
| LMgHA | 1200 °C | HA, LAP | 34 m²/g |
| LMgHA | 1400 °C | HA, (LAP) | 16 m²/g |

Table 2 is a summary of the stability of the hexaaluminate compositions prepared with the carbon xerogel as a template material. The material codes used in Table 2 represent the type of hexaaluminate prepared: LHA = LaAl₁₁O₁₈, LMHA = LaMnAl₁₁O₁₉, LMgHA = LaMgAl₁₁O₁₉. The crystal phases (XRD) are listed in order of intensity, where brackets are used to indicate trace amount. The phase codes used in Table 2 represent the following: HA = hexaaluminate, LAP = LaAlO₃, α = α-Al₂O₃. The surface areas were determined according to BET. All samples were previously calcined at 1300 °C for 5 hours while still in the carbon matrix. The samples calcined at 1000 °C were calcined in dry air. The same samples were then calcined at 1200 °C and 1400 °C in moist atmosphere (10 volume% H₂O) for 10 hours with intermediate phase and surface area characterizations.

Furthermore, the surface area of the compositions in Example 2, obtained by the method of the present disclosure, was compared with the surface areas of compositions comprising hexaaluminates obtained by a sol-gel and a co-precipitation method by Zwinkels *et al.* (Zwinkels, M.F.M. et al., Ind. Eng. Chem. Res. (1998), 37, p. 391) after similar ageing conditions. The results are displayed in Table 3. It was obvious that after ageing of the compositions for 10 hours at 1400 °C in a moist atmosphere comprising 10 volume% H₂O, the compositions of the present disclosure displayed a much higher surface area compared to the compositions obtained by a sol-gel and a co-precipitation method after ageing in similar harsh conditions.

**Table 3**

| **Material** | **Prep. method** | **Temperature** | **Surface Area** |
|---|---|---|---|
| LHA | Template | 1400 °C | 16 m²/g |
| LMHA | Template | 1400 °C | 9 m²/g |
| LMgHA | Template | 1400 °C | 16 m²/g |
| LaAl₁₁O₁₈ | SG | 1400 °C | 8 m²/g |
| LaAl₁₁O₁₈ | CP1 | 1400 °C | 5 m²/g |
| LaAl₁₁O₁₈ | CP2 | 1400 °C | 8 m²/g |

Table 3 is a comparison between the surface area of the compositions prepared using the disclosed method and the surface area of hexaaluminates prepared by Zwinkels *et al.* (Zwinkels, M.F.M. et al. Ind. Eng. Chem. Res. (1998), 37, p. 391), after similar ageing conditions. The material codes used in Table 3 represent the type of hexaaluminate prepared: LHA = LaAl₁₁O₁₈, LMHA = LaMnAl₁₁O₁₉, LMgHA = LaMgAl₁₁O₁₉. The preparation methods used were: template = the method according to the present disclosure, SG = sol-gel synthesis, CP1 and CP2 = two different coprecipitation methods. Data for the hexaaluminates prepared by SG, CP1 and CP2 is from Zwinkels *et al.* (Zwinkels, M.F.M. et al. Ind. Eng. Chem. Res. (1998), 37, p. 391). The surface areas were determined according to BET.

## Claims

1. A method for preparing a hexaaluminate, comprising the steps of:
a) providing a porous template material, wherein pores having a pore size of about 5-200 nm form at least about 50% of the total pore volume;
b) impregnating the material with a liquid comprising metal elements corresponding to the elements of said hexaaluminate to provide an impregnated material;
c) drying the impregnated material to provide a dried material;
d) optionally, repeating at least once step b), using the dried material, and step c);
e) calcining the dried material in an inert atmosphere to provide a calcined material; and
f) recovering the hexaaluminate by removing template material from the calcined material.

2. The method according to clam 1, wherein pores having a pore size of about 10-100 nm, preferably 10-50 nm, form at least about 50%, preferably at least about 75 %, of the total pore volume of said porous template material, more preferably wherein pores having a pore size of about 10-50 nm forms at least about 90% of the pore volume of said porous template material.

3. The method according to claim 1 or 2, wherein said porous template material is carbonaceous.

4. The method according to claim 3, wherein said porous template material is a carbon gel, such as a carbon xerogel or a carbon aerogel.

5. The method according to any one of claims 1 to 4, wherein the hexaaluminate is present in a beta-alumina phase, a magnetoplumbite phase or a related phase.

6. The method according to any one of claims 1 to 5, wherein the hexaaluminate comprises the elements
Al, O, A and, optionally, B
wherein Al represents aluminum, O represents oxygen, A represents one or more species selected from alkali metals, alkaline earth metals and rare earth metals and B represents one or more species selected from transition metals, Li and Mg.

7. The method according to claim 6, wherein the stoichiometric relation of the elements A, B and Al is described by the general formula
AB_{X}Al_{12-X}
wherein X is an integer from 0 to 11, preferably from 1 to 3.

8. The method according to claim 6 or 7, wherein A is one or more species selected from La, Ba, Sr, K, Ca, Ce and Nd.

9. The method according to any one of claims 6 to 8, wherein B is one or more species selected from Mg, Cr, Mn, Fe, Co, Ni and Cu.

10. The method according to any one of claims 6 to 9, wherein the hexaaluminate is LaAl₁₁O₁₈, LaMnAl₁₁O₁₉ or LaMgAl₁₁O₁₉.

11. A composition obtainable by a method according to any one of claims 1 to 10.

12. A catalyst composition comprising a hexaaluminate, wherein the composition has an average surface area of at least about 9 m²/g, preferably at least about 16 m²/g, after ageing of the composition in a moist high-temperature atmosphere.

13. A catalyst composition according to claim 12, wherein the average surface area is as measured after ageing of the composition for 10 hours at 1400 °C in a moist atmosphere comprising 10 volume% H₂O.

14. A supported catalyst having a support body and a coating comprising a composition according to any one of claims 11 to 13.

15. Use of a composition according to any one of claims 11 to 13 as a catalyst in a high-temperature application, such as a high-temperature application operating above about 800 °C, preferably above about 1000 °C, more preferably above about 1200 °C.

16. Use according to claim 15, wherein said high-temperature application is catalytic combustion.
